(19) **Europäisches Patentamt / European Patent Office / Office européen des brevets**

(11) **EP 2 143 492 A1**

(12) **EUROPEAN PATENT APPLICATION**

(43) Date of publication:
**13.01.2010 Bulletin 2010/02**

(51) Int Cl.:
**B01L 3/00** (2006.01)

(21) Application number: **08012597.4**

(22) Date of filing: **11.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Max-Planck-Gesellschaft zur Förderung der Wissenschaften e.V.
80539 München (DE)**

(72) Inventor: **Herminghaus, Stephan, Prof. Dr.
37073 Göttingen (DE)**

(74) Representative: **Hertz, Oliver
v. Bezold & Partner
Patentanwälte
Akademiestrasse 7
80799 München (DE)**

(54) **Method and microfluidic device for combining reaction components contained in liquids**

(57) The invention relates to a method and a microfluidic device for combining reaction components contained in liquids. The method comprises the steps: application of at least one first liquid filament containing a first reaction component on a first carrier substrate; application of at least one second liquid filament containing a second reaction component on a second carrier substrate; positioning of the two carrier substrates relative to each other at a predetermined distance such that the liquid filaments face each other; and bringing at least one of the at least one first liquid filament into contact with at least one of the at least one second liquid filament by creating at least one connecting point of the respective first and second liquid filaments. A microfluidic device for combining reaction components contained in liquids comprises two carrier substrates each being adapted for accommodating at least one first and at least one second liquid filament, wherein the liquid filaments are preferably each accommodated in a receiving means which is comprised in the carrier substrate.

**FIG. 1**

**Description**

The invention relates to a method for combining reaction components contained in liquids and to a microfluidic device for combining reaction components contained in liquids, comprising an application device being adapted for providing at least one first reaction component and at least one second reaction component, and an actuating device being adapted for bringing the at least one first and second reaction components into contact with each other.

In many applications of biotechnology such as genome sequencing and high-throughput screening of drugs it is important to perform very many (bio-) chemical reactions in parallel, whereby only minute amounts of material are available. Especially in the screening of combination drug formulations one has to explore the optimal concentrations of different substances in a drug. It has been widely recognized that designing drugs for particular purposes is not only a matter of finding the appropriate compounds but also their relative concentration to be used in the drug. The fact that the mutual interactions of different substances in their effects on a metabolism are used to infer information of the complex biochemical network in the target cell gives an impression of the complexity of these interactions themselves. It is therefore of great interest to study the interactions of drugs in well-controlled, variable concentrations. In conventional setups this requires a large number of pipetting steps. Usually one employs pipetting robot systems to perform such tasks, but these are very costly and there may be considerable transport losses of material in the dispensing system.

It is therefore an object of the invention to provide an improved method and device for obtaining large numbers of different combinations of reaction components whereby only very small amounts of reaction components are required and which allows a plurality of reactions to take place simultaneously.

The object of the invention is achieved by the method comprising the features of the independent method claim 1 and the microfluidic device comprising the features of the independent device claim 13. Preferred embodiments are given in the dependent claims.

According to the invention, reaction components contained in liquids are combined by application of at least one first liquid filament containing a first reaction component on a first carrier substrate and application of at least one second liquid filament containing a second reaction component on a second carrier substrate; positioning of the two carrier substrates relative to each other at a predetermined distance such that the liquid filaments face each other; and bringing at least one of the at least one first liquid filament into contact with at least one of the at least one second liquid filament by creating at least one connecting point of the respective first and second liquid filaments.

A microfluidic device according to the invention comprises an application device being adapted for providing at least one first reaction component and at least one second reaction component and an actuating device being adapted for bringing the at least one first and second reaction components into contact with each other. The application device comprises two carrier substrates, each being adapted for accommodating at least one first and at least one second liquid filament, respectively, and the application device is adapted for positioning the carrier substrates relative to each other at a predetermined distance such that the liquid filaments face each other. The actuating device is further adapted for bringing the at least one first liquid filament into contact with the at least one second liquid filament by creating at least one connecting point of the respective first and second liquid filaments.

Reaction components contained in liquids include, for example, liquid reaction components, liquid solutions, suspensions and combinations thereof. Aqueous solutions and suspensions, such as biological cell suspensions are important members but the method can also be used for other liquids such as e.g. solutions in organic solvents. The liquid can be electrically conductive or isolating. With the method according to the invention, at least two liquids, each containing a reaction component, are brought into contact with each other such that controlled amounts of each liquid merge and a reaction takes place. The first and the second reaction components and liquids can be identical or different. Preferably, the two liquids consist of or contain different reaction components.

In this application the terms "first reaction components", "first liquids", and "first liquid filaments" denote any reaction components, liquids, and liquid filaments which are applied to the first carrier substrate. Consequently, there can be more than one of each present on the first carrier substrate. The same applies to "second reaction components", "second liquids" and "second liquid filaments", being applied onto the second carrier substrate, respectively.

By combining reaction components according to the invention, at least two reaction components are brought into contact with each other, such that they can react. In this application the terms "react" or "reaction" refer to any type of interaction of the reaction components such as e.g. chemical reactions, biochemical reactions, mixing, blending, diluting, and aliquotation.

A carrier substrate is for example a glass wafer similar to a microscope slide. Generally, the carrier substrate can be made of any material, suitable for microfluidic devices or microarrays such as glass, silicon, plastics, PTFE, ceramics, silicone rubber (PDMS), photoresist, or similar. Preferably, the carrier substrate is made of an electrically isolating material such as plastics, glass or ceramics. The carrier substrate is preferably rectangular. It has a flat surface or a structured surface onto which the liquid filament is applied. The first and second carrier substrates can be identical or different. Preferably, different reaction components are applied to two identical carrier substrates.

The size of the carrier substrate can be in the range of a few square millimetres up to several hundred square centimetres. According to one preferred embodiment, the carrier substrate has the outer dimensions of a standard microtiter plate (multi-well-plate). In the following, the term "standard microtiter plate" refers for example to the ANSI standard. This allows for the use of common read out systems (e.g. ELISA-readers) or pipetting robots which are adapted to these standard sizes. The carrier substrate can also be smaller than a standard microtiter plate and be equipped with an adapter of the size of a standard microtiter plate. Carrier substrates having a size in the order of magnitude of the size of standard microtiter plates will in the following be referred to as "large scale carrier substrates".

According to another preferred embodiment, the carrier substrate can have dimensions of a microarray, for example in the range between 25 mm$^2$ to 25 cm$^2$ e.g. like microscope slides. Carrier substrates having a size in this order of magnitude will in the following be referred to as "small scale carrier substrates". A preferred embodiment of a small scale carrier substrate is e.g. quadratic or rectangular with side lengths in the range of 0.8 cm to 1.5 cm.

A first liquid containing a first reaction component is applied to a first carrier substrate to form at least one first liquid filament and a second liquid containing a second reaction component is applied to a second carrier substrate to form at least one second liquid filament. Generally, a liquid filament is a cohesive amount of liquid which is attached to a carrier substrate, in particular to a surface of a carrier substrate. The volume of a liquid filament depends on the dimensions of the carrier substrate and can be in a range from $0.5 \times 10^{-3}$ µl up to 2 ml. Preferably, a liquid filament has an elongated shape with a length L and a uniform cross section. The length L can be for example in the range of 5 mm to 5 cm for small scale carrier substrates and for example from 5 cm to 20 cm for large scale carrier substrates. Preferably, the liquid filaments on a large scale carrier substrate have a length equal to the width or length of a standard microtiter plate, thereby reaching from one edge of the carrier substrate to an opposite edge. The cross section can, e.g., be in the range from approximately 100 µm$^2$ up to 7 mm$^2$. The lower limit of the cross sectional dimension is determined by the largest molecules or entities which are dissolved or suspended in the liquids or by the minimum amount of liquid which is necessary for example for keeping a suspended cell alive. The width of a liquid filament is therefore preferably larger than 10 µm, more preferably larger than 20 µm. The upper limit of the cross sectional dimension is determined by the capillary length of the liquid if gravitational effects shall be neglected. For aqueous liquids, having a capillary length of 2,7 mm, therefore a width and depth of the filament of not more than 2 mm would be suitable.

Preferably, the liquid filament has a straight shape. Alternatively, curved shapes for example meandering or spiralling shapes are possible. The shape of the liquid filament can be determined by a surface structure or by the surface properties of the carrier substrate and the specific wetting properties of the liquid on the surface.

According to the invention, the first and the second carrier substrate, each containing at least one liquid filament, are positioned relative to each other at a predetermined distance, such that the first and second liquid filaments face each other. The predetermined distance can be in the same order of magnitude as the cross sectional dimension of the liquid filaments.

For this purpose, the application device is adapted for positioning the two carrier substrates relative to each other at a predetermined distance, such that the liquid filaments face each other. This is for example achieved by stacking two carrier substrates on top of each other like a sandwich. Positioning can be done manually or automatically, e.g. by a motor drive or just by using a suitable spacer. Therefore, the application device may comprise a positioning aid such as a guide rail and/or a spacer device for finding the correct relative positions of the carrier substrates when they are positioned manually. Alternatively, the application device may also comprise a (motor driven) robot device for automatically positioning the carrier substrates.

The predetermined distance between the carrier substrates is selected in dependence on the method for conducting the next step. Preferably, the selected distance is not zero, i.e. the opposing surfaces of the first and second carrier substrates remain spaced apart by some distance.

By the next step, at least one of the at least one first and at least one of the at least one second liquid filaments are brought into contact by creating at least one connecting point of the liquid filaments. A connecting point can be, but is not necessarily, a geometrical crossing point of the geometrical axes of the liquid filaments. In this application, the term "connecting point" shall be understood as a point in which the at least one first liquid filament and the at least one second liquid filament contact each other, such that the two liquids can merge at this point and a desired reaction of the reaction components contained in the first and second liquid filament can take place.

Bringing the two liquid filaments in contact with each other can be achieved by different methods, e.g. by reducing the distance between the first and second carrier substrate such that the first and second liquid filaments merge. With this method the formerly described step of positioning the carrier substrates at a predetermined distance, and the step of bringing a first liquid filament into contact with a second liquid filament by creating at least one connecting point, can be executed in one single step. Alternatively, the first and second liquid filaments can be brought into contact by application of an electric field between the first and the second liquid filament as described further below. In this case, the distance between the carrier substrates has to be selected such that first and second liquid filaments are close but are not in contact without an electric field. This step is explained in more detail below.

The microfluidic device according to the invention comprises an actuating device which is adapted for bringing the first and second liquid filaments into contact by creating at least one connecting point. This can be achieved by way of reducing the distance of the carrier substrates or by application of an electric field between the liquid filaments. Therefore, the actuating device may comprise means for reducing the distance automatically or manually, and/or alternatively means for supplying a voltage to the liquid filaments.

If at least one of the liquid filaments has a curved shape, or more than one liquid filament is applied to the first or the second carrier substrate, more than one connecting point between the liquid filaments can be formed. In this case, a reaction can take place in each of the connecting points.

Upon formation of a connecting point between two liquid filaments, the liquid is sucked from the filament due to capillary forces. This preferably leads to a rupture of the liquid filaments adjacent to the connecting point. Thus, a separated blob of liquid which contains a mixture of the liquid of the first liquid filament and the liquid of the second liquid filament is formed in this connecting point. Preferably, the total volume of the blob and the mixing ratio of the two liquids in the blob is well defined and can be calculated.

By this method according to the invention, combinations of very small amounts of liquids can be obtained in a very effective, fast and cost-effective manner. By creating more than one connecting point a plurality of different combinations can be obtained simultaneously, thereby leading to a plurality of simultaneous reactions without having to measure the components for each reaction separately. Thus transport losses of material can be kept to a minimum and no expensive pipetting robot system is necessary.

According to a preferred embodiment, at least one first liquid filament and/or the at least one second liquid filament is accommodated in a receiving means which is comprised in the first and/or second carrier substrate, respectively. Preferably, at least one of the carrier substrates comprises at least one receiving means for accommodating a liquid filament. In the following, the term "receiving means" shall denote a means for accommodating one single liquid filament. Such receiving means can for example be a patterned modification of the wetting properties of a two-dimensional plane surface, or a three dimensional structure as, e.g., a groove, or a combination of both.

A wettability pattern on a surface comprises spatially separated regions having different wetting properties with respect to a liquid to be applied. On such patterned surfaces, wetting only takes place in defined regions where the contact angle of the liquid on the substrate is low, while surface regions on which the liquid has a higher contact angle remain free of liquid. An area of increased wettability can be formed by means of an electrical field created with a buried electrode or by other surface modifications.

For accommodating an elongated liquid filament, the receiving means is preferably an elongated strip on which the liquid to be applied has a low contact angle, while on adjacent surfaces it has a higher contact angle, i.e. a low wettability. The liquid which is applied to the surface will then preferably reside on the strip with the low contact angle. Thus, the shape of the liquid filament can be determined by the shape of the strip. For accommodating liquid filaments containing an aqueous solution or suspension, the receiving means preferably comprises a hydrophilic strip, while the adjacent surface regions should be hydrophobic.

According to another preferred embodiment of the invention, the at least one receiving means is a channel in which the liquid filament is formed and which is recessed from a surface of the carrier substrate. In a preferred embodiment at least one of the carrier substrates comprises at least one elongated channel which is recessed from the flat surface of the substrate for accommodating a liquid filament. This recessed channel can have the form of a trough and normally has an elongated "strip-like" shape, for instance with a rectangular outline. Although this is the preferred shape of the channels, a channel according to the invention can also exhibit curves or corners e.g. like a meandering groove. The channel can, for example, be cut or etched into the surface of the carrier substrate to form an elongated open trough for accommodating a liquid. Preferably, the channel has a well defined width and length. Application of the liquid filaments in channels has the advantage, that the filaments have a very well defined uniform cross section and thus a well controlled amount of liquid is contained in every liquid filament. A further advantage is that liquid can be applied to a channel by capillary suction.

Preferably, the contact angle of the liquid on the substrate material in the channels and the dimensions of the channels are selected such that the liquid is capable of filling the channels without wetting the adjacent surface of the carrier substrate. The dimensions of the channels are preferably selected in accordance with the wetting properties of the liquid on the substrate material, such that the liquid is capable of filling the channel while adjacent surfaces remain free of liquid. In particular, the channels can have a well defined cross-section which is adapted to the wetting properties of the liquid on the substrate material.

Preferably, the elongated channel has a rectangular cross-section with a width w and a depth d and an aspect ratio $X = d/w$ selected in dependence on the contact angle of the liquid to be used on the carrier substrate such that the liquid to be used is capable of filling the channel, while wetting surfaces of the carrier substrate adjacent to the channel is suppressed. The term "suppressed" shall be understood in that the liquid resides preferably in the channel and not on the adjacent surfaces. The selection of the dimensions of the channels and of a suitable aspect ratio $X$ is explained in more detail below. In a preferred embodiment of the invention, the dimensions of the channels are selected for accommodating liquid filaments containing aqueous solutions or suspensions in the channel.

Thus, a liquid filament can be formed in a channel and its shape is defined by the shape of the channel. The channel can have open ends with the open ends coinciding with the edges of the carrier substrate. This has advantages for filling the channel for example by capillary suction from a liquid bath. Alternatively, the channel can have a length which is shorter than the width of the carrier substrate. It is also possible to combine the arrangement of channels with a patterned wetting modification of the surface of the carrier substrate.

Preferably, a plurality of the first or the second liquid filaments is applied onto the first or the second carrier substrates, or onto both. This allows for the simultaneous combination of a plurality of reaction components. Therefore a plurality of receiving means, each for accommodating one liquid filament can be arranged on one or on both carrier substrates. Preferably, the receiving means have an elongated shape. Furthermore, they can be spaced apart by a distance l to ensure a sufficient separation of neighbouring liquid filaments.

Preferably, a plurality of first or second liquid filaments are arranged in parallel lines on the first and/or second carrier substrate, respectively. For this purpose, a plurality of receiving means can be arranged in parallel on the carrier substrate. The parallel lines are preferably straight lines. This helps to ensure that the liquid filaments have uniform cross sections along the whole length of the liquid filaments. With parallel arranged liquid filaments, the first and the second carrier substrate are preferably positioned relative to each other with the first liquid filaments and the second liquid filaments being perpendicular to each other. With a perpendicular arrangement, a separation of the merged blobs in adjacent connecting points can be easily achieved. For executing a well defined array of combinations, the application device is preferably adapted for positioning the carrier substrates relative to each other, such that the receiving means on the first carrier substrate are perpendicular to the receiving means on the second carrier substrate. Thus, the first liquid filament on the first carrier substrate and the second liquid filament on the second carrier substrate are perpendicular to each other. This can for example be achieved if two identical carrier substrates, each with a plurality of parallel arranged channels which are positioned at a predetermined distance, such that they face each other, and whereas one carrier substrate is rotated about 90 degrees around the surface normal to the surface accommodating the liquid filaments.

In a preferred embodiment of the invention, the liquid filaments on at least one of the carrier substrates contain various concentrations or compositions of the reaction component. For example, a number N of first liquid filaments can be applied on the first carrier substrate, each containing a different concentration or composition of reaction component in the liquid. These can be completely different reaction components or more than one reaction component in different mixing relations or just different concentrations of a single reaction component. N liquid filaments can contain up to N different reaction components. Thus, N liquid filaments containing N different concentrations or compositions of the reaction component are applied onto the carrier substrate. In an even more preferred embodiment, both carrier substrates carry a plurality of liquid filaments, whereas the first carrier substrate carries N liquid filaments containing N different concentrations of the first reaction component and the second carrier substrate carries M liquid filaments containing M different concentrations of the second reaction component. When these two carrier substrates are combined according to the invention, an array of N $\times$ M different reactions can be executed in parallel. N different concentrations of the reaction component can include a pure solvent and pure reaction component. Preferably, N receiving means are present on the carrier substrate for accommodating N different liquids. N and M can for example be in the range of 2 to 200, preferably in the range of 3 to 30.

According to one preferred embodiment on a large scale carrier substrate, N and M are chosen in accordance with the matrix dimensions of standard microtiter plates, such as 8 $\times$ 12 or 16 $\times$ 24. Preferably, in this case the designated connecting points are located at the same relative positions on the carrier substrates as the standard positions of the wells on the microtiter plates. This is advantageous, if the method and device according to the invention shall be combined with applications of standard microtiter plates. For example the reaction results of the inventive method can be transferred to microtiter plates by pipetting robot systems adapted to the dimensions of microtiter plates.

According to an other preferred embodiment on small scale carrier substrates, N and M are in the range of 10 to 100, more preferably in the range of 10 to 30. For example, on a square small scale carrier substrate with a side length of 1 cm and an area of 1 cm$^2$, 400 connecting points can be formed, with N and M being equal to 20.

Accordingly, each of the N or M liquid filaments may contain one specific concentration or composition of reaction components. It is however also possible that the concentration or composition of a reaction component in one liquid filament varies along the longitudinal extension of the liquid filament. Accordingly, a plurality of different combinations of various reaction components in various concentrations can be obtained in parallel.

One way of bringing the first and second liquid filaments in contact by creating a connecting point is by reducing the distance between the first and second carrier substrates. For this embodiment of the invention, it is preferred that the liquid filament slightly protrudes from the surface of the carrier substrate. This is usually the case if the liquid filament is applied onto a plane surface of the substrate such as a hydrophilic strip. Alternatively, if the liquid filament is applied in a channel, the channel could be slightly overfilled. If two carrier substrates with liquid filaments protruding from their surface are positioned such that the first and second liquid filaments get in contact, but the surfaces of the first and second carrier substrates do not touch, connecting points between the first and second liquid filaments are formed. Thus, liquid necks form between the two liquid filaments giving rise due to a strongly negative Laplace pressure. This leads to a suction of the liquid from the adjacent surface be it in a channel or on a wetting strip. As a consequence, the liquid filaments are pinched off between neighbouring connecting points. Therefore, separated liquid blobs containing a mixture of the first and second liquid filament are formed.

In an alternative embodiment of the invention, the first and second liquid filaments are brought into contact by application of an electric field between the first and the second liquid filament. For this purpose, electrodes are provided on the first and the second carrier substrate, which are in contact with the first and the second liquid filament, respectively, or have a high electric capacity with the latter. The liquid to be applied is preferably electrically conductive. The electric field applied between the liquid filaments is preferably an AC field in order to avoid electrolytic effects. For the application of an electric field, the electrodes can be connected to a voltage supply. The method of bringing two liquid filaments in contact with each other by application of an electric field is described in more detail below.

According to a preferred embodiment of the invention, a carrier substrate, which is preferably made of an electrically isolating material, comprises one or more electrodes which are connectable to a voltage supply. For an application of an electric field between first and second liquid filaments, the electrodes should be in contact to the liquid filament and both carrier substrates should contain electrodes. For this purpose, the electrodes can be evaporated onto the surface of the carrier substrate. For supplying a voltage to a liquid filament contained in a receiving means, the electrode is preferably comprised in the receiving means. The liquid is preferably electrically conductive. If the liquid filament is accommodated in a channel, the electrode can, for example, be positioned at the bottom of the channel or in a sidewall. Electrodes for application of a voltage between the first and the second liquid filament can have various shapes. They can for example be formed by a conductive layer on the surface to which the liquid filament is attached. Such conductive layer can for example be formed by evaporation of a metallic layer onto the surface. Alternatively, it can be e.g. an ITO layer on the surface. A filament-shaped electrode such as e.g. a metallic wire is also possible. Such filament-shaped electrode can extend along the full length of the liquid filament such as a metallic wire. Another possibility are dot shaped electrodes at the designated connecting points of the first and second liquid filaments. Such electrodes could be formed by vapor deposition onto the respective surface.

A carrier substrate preferably comprises one electrode per liquid filament, i.e. per receiving means. Preferably, each electrode for each liquid filament can be controlled individually by the voltage supply. In this case, a particular combination of one first liquid filament and one second liquid filament can be selected and an electric field be individually supplied to these. Thus, even with an array of N $\times$ M potential connecting points between N first liquid filaments and M second liquid filaments, a single combination can be individually selected and a single reaction be triggered by forming a single connecting point.

If more than one liquid filament is applied to either the first or the second carrier substrate, it is also possible that some or all electrodes on one carrier substrate are connected to each other or are formed as one single electrode. Thus an electric field simultaneously can be applied between all first liquid filaments and all second liquid filaments. Consequently, an array of connecting points can be obtained between all first and second liquid filaments at the same time.

Furthermore, an electrically isolating carrier substrate can comprise electrodes which are buried under the surface of the carrier substrate. By application of a voltage to such buried electrodes the wettability of the surface of the carrier substrate can be increased. Thus, by filament-shaped buried electrodes in an electrically isolating carrier substrate, strips of enhanced wettability can be formed on the surface. Wettability modification of surfaces by application of electric fields is generally known in the art.

As a third application of electrodes contained in a carrier substrate, these can be used for applying liquid filaments to the surface. For this purpose, filament shaped electrodes are attached to the surface, for example by vapor deposition or buried under the surface. When a voltage is applied between adjacent electrodes, an electric field forms in the gap between the electrodes and a liquid which is brought into vicinity of the electric field is sucked into the region of the electric field electrostrictively. As a result, a liquid filament can be formed in the gap between adjacent electrodes or, in case of buried electrodes, on the surface of the carrier substrate in the region above the gap.

When an electric field is applied between a first and a second liquid filament on opposing first and second carrier substrates, the liquid surfaces deform towards the opposing liquid filament at the positions of closest proximity between the first and the second liquid filaments. If the voltage exceeds a critical value, the liquid surface becomes unstable, and liquid necks form between the first and the second liquid filament and the two liquids merge at this position and form a connecting point.

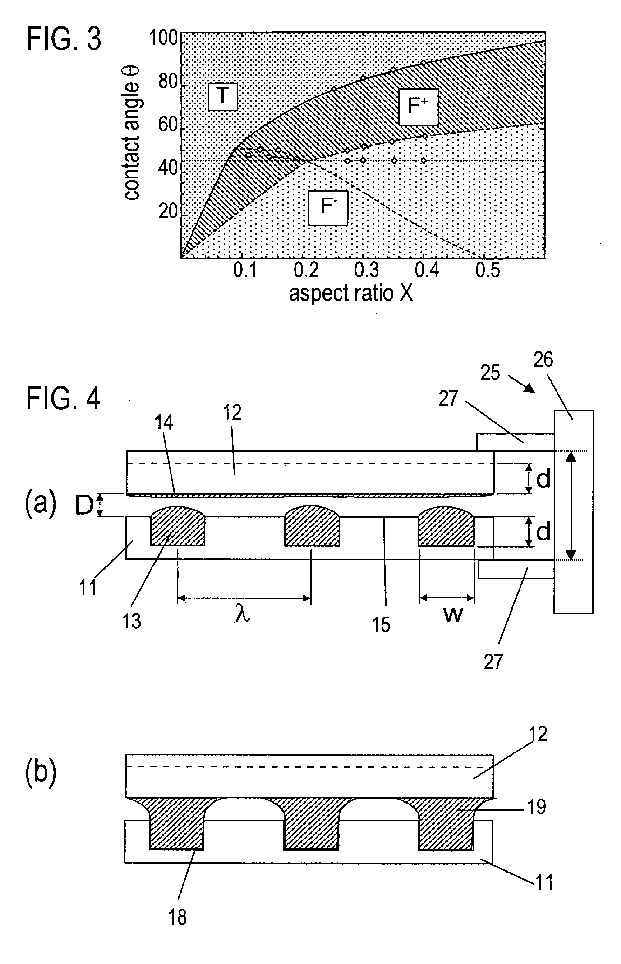

If the distance between the first and second carrier substrates is properly adjusted (a calculated example is given further below with respect to figure 3) and the contact angle of the liquids on the carrier substrate material is not too small, this is sufficient to suck the liquid out of the channel or from the surface next to each neck. This leads to separated blobs of liquid at each of the connecting points, in which well defined amounts of liquid from the first liquid filament and from the second liquid filament are mixed in a specific mixing relation. Thus, at these positions, a reaction of the two liquids contained in the first liquid filament and the second liquid filament can take place.

Now, the method of applying a liquid filament on a carrier substrate shall be explained. A liquid filament can be applied to a carrier substrate by different methods, depending on the carrier substrate and the type of liquid.

According to a preferred embodiment of the invention, the liquid filament is applied to at least one channel in the carrier substrate by capillary suction from a liquid bath. For this purpose, the channel preferably has at least one open end which coincides with one edge of the carrier substrate. The liquid to be applied to the carrier substrate is provided in a liquid bath in an open container. For applying the liquid into the channel on the carrier substrate, the carrier substrate is dipped into the liquid bath, such that the open end of the channel is immersed in the liquid. Capillary forces now lead to a suction of the liquid into the channel.

If the bath is provided with a spatial variation of the composition or concentration of the liquid, a plurality of channels in one carrier substrate can be filled with the various compositions or concentrations of reaction component at the same time.

An alternative method for applying liquid filaments to the carrier substrates is pipetting the liquid onto the carrier substrate. If the surface of a plain carrier substrate comprises a wettability pattern having regions of different wettability, the liquid filaments will preferably reside on the substrate in regions of high wettability. By the shape of the regions having high wettability, the shape of the liquid filaments can be determined. If the liquid filament shall be applied to a channel in the carrier substrate, the dimension of the channel and the wettability should be adapted such that the liquid, which is pipetted onto the substrate, can fill the channel completely without wetting the surface next to the channels. The contact angle of the liquid at the material of the carrier substrate is selected such that the liquid fills the channels, but does not reside on the regions adjacent to the channels. The conditions for this are well understood and have been shown to work reliably in practice for example in R. Seemann et al., P.N.A.S., 2005 vol. 102, no. 6, 1848-1852; J.-C. Baret, M. Decre, S. Herminghaus, and R. Seemann, Langmuir 23 (2007) 5200; and H. Gau, S. Herminghaus, P. Lenz, R. Lipowsky, Science 283 (1999) 46.

In a further preferred embodiment, a liquid filament is applied on a carrier substrate with a varying composition or concentration of reaction component along the liquid filament. A liquid filament in which a mixing relation of two components varies along the length of the liquid filament can be formed by application of a first liquid filament containing only the first liquid component and subsequent application of a second liquid component. The underlying principle is known as Taylor-Aris dispersion (G. Taylor, Proc. Roy. Soc. London Ser. A 219 (1953) 186; also described e.g. in M. S. Bello, R. Rezzonico, P. G. Righetti, Science 266 (1994) 773). The first liquid filament can for example be applied by pipetting. Subsequently a second liquid can also be pipetted onto one end of the liquid filament. If at the same time, liquid is sucked from the other end of the liquid filament for example by means of a pump or just a napkin paper, a fleece or similar, the first liquid will be sucked in and a Poiseuille flow profile will be established in the liquid filament. The shape of the Poiseuille profile inherently leads to an almost linear concentration profile along the channel. After a short time, which is sufficient to overcome the channel cross section diffusively, but much shorter than the time needed to equilibrate the concentration in longitudinal direction, a quite homogeneous concentration gradient will be established. This way a concentration or composition gradient can be formed along the liquid filament.

Alternatively, a concentration profile can be achieved in a liquid filament contained in a channel by first applying a first liquid component to a channel until the elongated channel is half way filled, i.e. from one end up to the half length L. This is preferably done by capillary suction. Subsequently, a second liquid component is applied to the channel by capillary suction from the end which is already filled with the first liquid. Then the channel will be filled over the full length due to capillary suction and the liquid filament accommodated in the channel will have a varying concentration along its length. In particular, in the first half of its length (i.e. in the part between the end from which liquid is applied up to the half length L) a linear concentration profile or profile of mixing relation will be formed.

With the method and device according to the invention, the liquid reaction components can further be combined with at least one third reaction component. The third reaction component is not necessarily liquid. For example, according to a preferred embodiment of the inventive method, the first and second carrier substrates can be separated after the first and second liquid filaments have been brought into contact by formation of connecting points and after separated liquid blobs have formed at the connecting points. After separation of the first and second carrier substrates, blobs of merged liquid remain separated at the positions of the former connecting points. Thus, an array of N $\times$ M liquid blobs of different composition is formed on each of the carrier substrates. These separated blobs of liquid can then be transferred to for example a standard microtiter plate containing third reaction components. For this purpose, large scale carrier substrates having the size of microtiter plates are particularly useful, because conventional pipetting robot systems can be used for transferring the reaction results obtained with the inventive method to the wells of a microtiter plate. Third reaction components can for example be entire biological cells, DNA-strings, proteins, or enzymes, etc.. Preferably, an array of different third reaction components is contained in the wells of a microtiter plate. Other methods for transferring the reaction products obtained with the method of the invention to third reaction components can also be used. Reaction products obtained with small scale carrier substrates could for example be transferred to a third reaction component by a printing process.

According to an other preferred embodiment of the invention, a third reaction component can also be applied to the carrier substrate prior to the liquid filaments. For example, the surfaces of one or more receiving means on a carrier substrate can be at least partially functionalized and thereby provide at least one third reaction component. The receiving means preferably comprises functionalized sections. The surface can for example be functionalized by fixing molecules to the surface e.g. by spotting. As above, such molecules can for example be DNA-strings, proteins, enzymes, etc.. The molecules are preferably fixed to the designated connecting points of the carrier substrates, where the liquid blobs form by the inventive method. Preferably an array of different molecules is spotted to the connecting points. Spotting techniques for conventional microarrays are known in the state of the art. The molecules can for example be fixed to the bottom or a side wall of the channels. The surface functionalization is not necessarily restricted to the connecting points, but can also be applied to the entire surface of a receiving means such as a channel or a strip of enhanced wettability. Other surface modifications leading to an interaction with the first and second reaction components contained in the first and second liquid filaments can also form a surface functionalization and thereby provide a third reaction component. Surface functionalization can be combined with small scale carrier susbstrates and large scale carrier substrates.

In a preferred embodiment of the invention, the channels for accommodating liquid filaments can have widened sections at the positions of the connecting points such that the separated blobs of liquid mixture are completely accommodated in the widened sections. Such widened sections can be formed by drilling holes through the carrier substrate at the designated connecting points. These bored channel holes can be closed by bonding a continuous substrate layer to the backside of the carrier substrate, thereby forming cylindrical widened sections. If the continuous layer for closing the holes is made of a conductive material, this layer can also form an electrode, which is in contact with the liquid filament only at the designated positions of the connecting points.

The bottom of the channels in the carrier substrates are preferably at least partially transparent, such that the reactions can be observed and analysed by optical methods. In particular, the bottom is preferably transparent at the positions of the connecting points such as in the above described widened sections. Preferably, the carrier substrate is at least partially transparent at the positions of the receiving means. Alternatively, the carrier substrate can be completely transparent.

Partially transparent bottoms of the channels can be formed by covering bored through holes with a transparent continuous layer such as a glass substrate. By the same way, transparent electrodes can be formed e.g. from an ITO-covered glass substrate by bonding it to the backside of a carrier substrate with bored-through holes.

In an even more preferred embodiment of the invention, the first and/or second carrier substrate is completely made of transparent material, e.g. glass. This allows for the analysis of the reactions by conventional optical methods such as fluorescence, Raman spectroscopy, or infrared spectroscopy.

For keeping the predetermined distance between the first and second carrier substrates, a spacer device can be provided. Such spacer device can be comprised in one of the carrier substrates or in both, for example in form of protrusions between the positions of the liquid filaments. A spacer device could also be a separate component to be arranged between the carrier substrates. It can also be a guide rail with positioning means for positioning the first and the second carrier substrate relative to each other.

An inventive carrier substrate, adapted to be used with a microfluidic device according to the invention, has a flat surface and a plurality of elongated receiving means on the flat surface which are adapted to the wetting properties of the first liquid on the carrier substrate material, such that a first liquid is capable of being accommodated in or on the receiving means while wetting of the flat surface next to the receiving means is suppressed. Such carrier substrate is adapted to be positioned relative to a second carrier substrate having a flat surface, with the flat surfaces facing each other. Preferably, the carrier substrate comprises a spacer device for keeping a predetermined minimum distance between its flat surface and the second carrier substrate. As described above, a receiving means can for example either be a strip-shaped surface modification with an enhanced wettability, or a channel which is recessed from the flat surface and having dimensions which are adapted to the wetting properties of the first liquid.

The invention shall now be described in more detail with respect to the accompanying schematic drawings, in which:

Figure 1 shows a first embodiment of a microfluidic device in accordance with the invention;

Figure 2(a) shows a carrier substrate of a microfluidic device according to a second embodiment of the invention;

Figure 2(b) shows the carrier substrate of Figure 2(a) which is accommodating liquid filaments;

Figure 3 shows a morphological phase diagram of liquid structures forming in a channel with rectangular cross sections;

Figure 4(a) shows a side view of a microfluidic device of the second embodiment of the invention in which first and second carrier substrates have been positioned at a predetermined distance;

Figure 4(b) is a side view of the microfluidic device of Figure 4(a) showing liquid necks;

Figure 5 is a plan view of a microfluidic device according to the invention in which liquid blobs have formed at connecting points;

Figure 6 shows a further embodiment of a carrier substrate for a microfluidic device according to the invention with electrodes at the bottom of the channels and spacer devices ;

Figure 7 is a graph illustrating a calculation of the balance between the Laplace pressure and electric surface stress;

Figure 8 is a diagram illustrating the selection of a carrier substrate distance;

Figure 9 is a plan view of a further embodiment of a carrier substrate having widened sections;

Figure 10 is a perspective view of a carrier substrate with partially functionalized receiving means;

Figure 11 is an illustration of the method of applying liquid filaments to channels by capillary suction from a liquid bath; and

Figure 12 is an illustration of a method of applying a liquid filament with varying composition along the liquid filament.

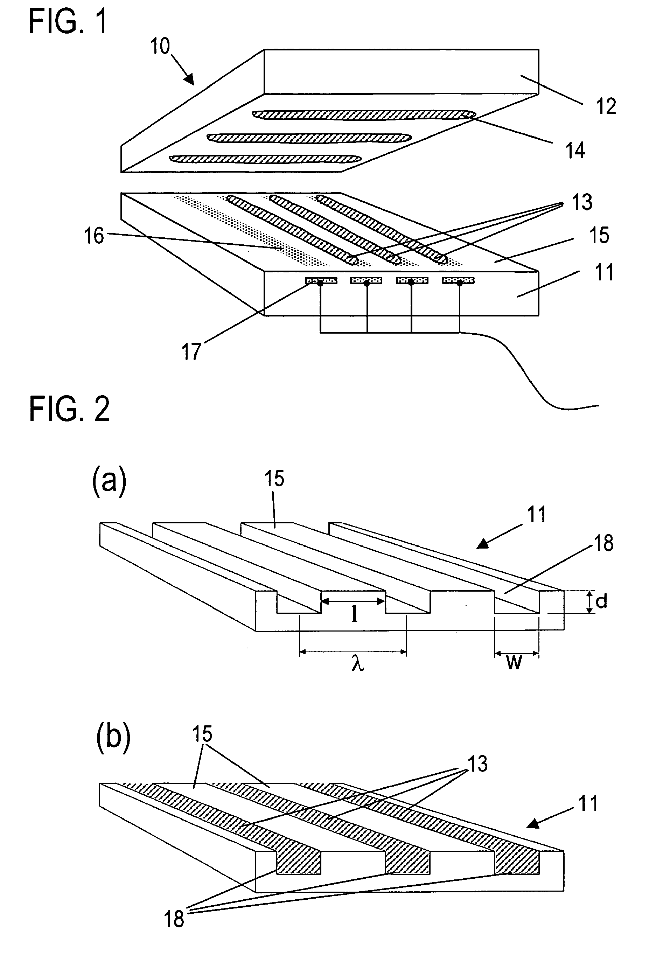

Referring to Figure 1, a microfluidic device 10 according to the invention comprises a first (11) and a second (12) carrier substrate for accommodating first (13) and second (14) liquid filaments. The first carrier substrate 11 has a flat surface 15 on top of which the first liquid filaments 13 containing a first reaction component are applied. The surface 15 has a surface pattern with four receiving means 16 each consisting of a strip with an enhanced wettability (shown as shaded strips 16). Three first liquid filaments 13 are applied to the receiving means 16, while one strip is uncovered for purpose of illustration only. The wettability structure of the surface 15 is provided by application of a high voltage to filament-shaped electrodes 17, which are on or buried under the surface 15 of the carrier substrate 11. The second carrier substrate 12 is positioned above the first carrier substrate 11. Three second liquid filaments 14 containing a second reaction component are applied to the second carrier substrate 12 on respective receiving means (not shown). The liquid filaments 13, 14 are arranged in parallel on each carrier substrate 11, 12. The carrier substrates 11, 12 are positioned relative to each other such that the first liquid filaments 13 on the first carrier substrate 11 are perpendicular to the second liquid filaments 14 on the second carrier substrate 12. If, now, the first 11 and second 12 carrier substrate are positioned such that the first 13 and second 14 liquid filaments are brought into contact, by stacking the second carrier substrate 12 on top of the first carrier substrate 11 with a small distance, nine connecting points between the first and liquid filaments are formed.

According to a second embodiment of the invention, the receiving means comprise channels 18 for accommodating the liquid filaments 13 which are recessed from the surface 15 of the carrier substrate 11 (Figure 2(a)). Three elongated channels 18 have a length which reaches from one edge of the carrier substrate 11 to the opposite edge. Thus, the channels 18 have two open ends which coincide with the edges of the carrier substrate 11. The channels 18 have a uniform rectangular cross section with a width w and a depth d and are arranged in parallel with a uniform distance between adjacent channels. The sum of the distance 1 and the width of the channels is denoted period $\lambda$.

The width w and depth d of the channels is adapted to the wettability of the liquid forming the liquid filaments. If the contact angle of the liquid on the carrier substrate and the aspect ratio X = d/w of the channels 18 are properly adjusted, the liquid fills the channels, but does not reside on the regions between the channels as shown in Figure 2(b). In other words, the geometry of the channels in a given carrier substrate material is selected such that the liquid is exclusively accumulated within the channels. Appropriate conditions for this are shown in the morphology diagram of Figure 3. The vertical axis $\theta$ represents the contact angle of the liquid at the substrate material. The horizontal axis represents the aspect ratio of the grooves, X = d/w. Furthermore, the reference sign T indicates regions where droplets are sitting above the channels. F indicates filamentous structures filling the channels. The plus and minus signs indicate structures with positive and negative Laplace pressure, respectively. If the contact angle is positive but below 45 degrees, the liquid fills the channels completely, but stays away from the flat regions of the substrate. According to Figure 3, the same may happen also for larger contact angles, depending on the aspect ratio of the channels. The different contents of neighbouring channels thus stay well separated. Alternatively, an appropriate geometry of the channels can for example be found by trial and error.

Figure 4(a) is a side view of two identical carrier substrates 11, 12 on top of each other. Both carrier substrates 11, 12 comprise three channels 18 with rectangular cross sections. First and second liquid filaments 13, 14 are contained in the channels 18, whereas the second carrier substrate 12 is positioned such that the second liquid filaments 14 face downwards towards the first carrier substrate 11. The channels 18 are slightly overfilled such that the liquids have a positive Laplace pressure and the liquid surfaces protrude over the surface 15 of the carrier substrate. In other words, the channels are slightly more than brimful. In Figure 4(a), the first carrier substrate 11 and the second carrier substrate 12 are kept at a predetermined distance D at which there is no contact between the first liquid filaments 13 and the second liquid filaments 14.

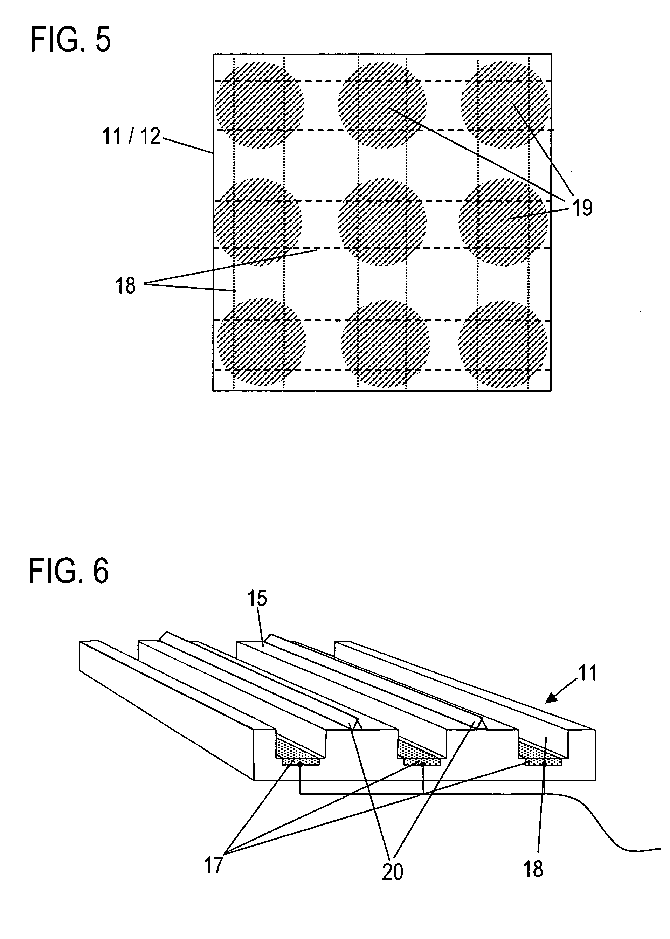

The first 13 and second 14 liquid filaments can be brought into contact by reducing the distance D by means of an actuating device 25. The actuating device 25 comprises a guide rail 26 and two positioning means 27. As soon as the opposing liquid surfaces of the first 13 and second 14 liquid filaments touch each other, capillarity induces merging of the opposing liquids in the connecting points. As a result and usually within milliseconds, liquid necks 19 form in the connecting points between the first 13 and the second 14 liquid filaments (Figure 4(b)). These usually have a strongly negative Laplace pressure and thus, liquid of the first 13 and second 14 liquid filaments is sucked from the channels adjacent to the connecting points thereby forming a separated liquid blob at each connecting point. Thus, separated blobs of liquid mixture are formed in each connecting point as shown in the plan view of an array of nine connecting points in Figure 5. As a result, the desired reaction between the reaction components contained in the first and the second liquid filament is obtained in each of the blobs. If transparent carrier substrates, or partially transparent carrier substrates 11 and/or 12 are used, the blobs can now be analysed by standard optical methods (e.g. fluorescence, Raman spectroscopy, infrared spectroscopy).

Alternatively, the first and second liquid filaments 13, 14 can be brought into contact by application of a voltage between the first and second liquid filaments 13, 14. A carrier substrate adapted for this embodiment comprises electrodes for contacting the liquid filaments. Figure 6 shows a carrier substrate 11 in which electrodes 17 are embedded in the bottom of channels 18 and which can be connected to a voltage supply (not shown). The carrier substrate 11 has periodically arranged parallel channels 18 with a rectangular cross section of a certain width w and depth d such as the carrier substrate of Figure 4. Additionally the carrier substrate 11 shown in Figure 6 comprises protrusions 20 on the surfaces 15 between the channels 18. These act as a spacer device for keeping a minimum distance between the surfaces 15 of the first and second carrier substrates 11, 12.

In the following, contacting the first and second liquid filaments by application of a voltage shall be described in more detail with respect to two identical carrier substrates. The carrier substrates are assumed to comprise periodically arranged parallel channels with a rectangular cross section, a width w and a depth d and electrodes for supplying voltage to the liquid filaments in the channel as for example shown in Figure 6. We now consider a displacement of the liquid surface above the level of the substrate surface 15. The maximum height of this displacement, which will be reached in the centre of the channel, is called h. The cross section of the liquid surface is approximately circular because of the surface tension. The radius of curvature of the cross section surface is $R_1 = h/2 + w^2/8h$. $R_1$ thus represents the transversal radius of curvature. Due to the attraction between the opposing first and second liquid filaments in the regions of closest proximity and due to the finite period $\lambda$ of the channels on the opposite carrier substrate, there is an additional curvature along the channel. The corresponding longitudinal radius curvature is $R_2 = \lambda^2/4\pi^2 h$. The Laplace pressure which is associated with this displacement is

$$p_L = \gamma h \left( \frac{8}{w^2} + \frac{4\pi^2}{\lambda^2} \right) \qquad (1)$$

where $\gamma$ is the surface tension of the liquid. This pressure is to be balanced by the electric pressure exerted onto the surface by the electric field.

$$p_E = \epsilon_0 \frac{U^2}{(D - 2h)^2} \qquad (2)$$

where U is the applied voltage. Setting $p_L = p_E$ leads to

$$\frac{\epsilon_0 U^2}{\gamma D}\left[8\left(\frac{D}{w}\right)^2 + \left(2\pi\frac{D}{\lambda}\right)^2\right]^{-1} = \frac{2h}{D}(1 - \frac{2h}{D})^2 \quad (3)$$

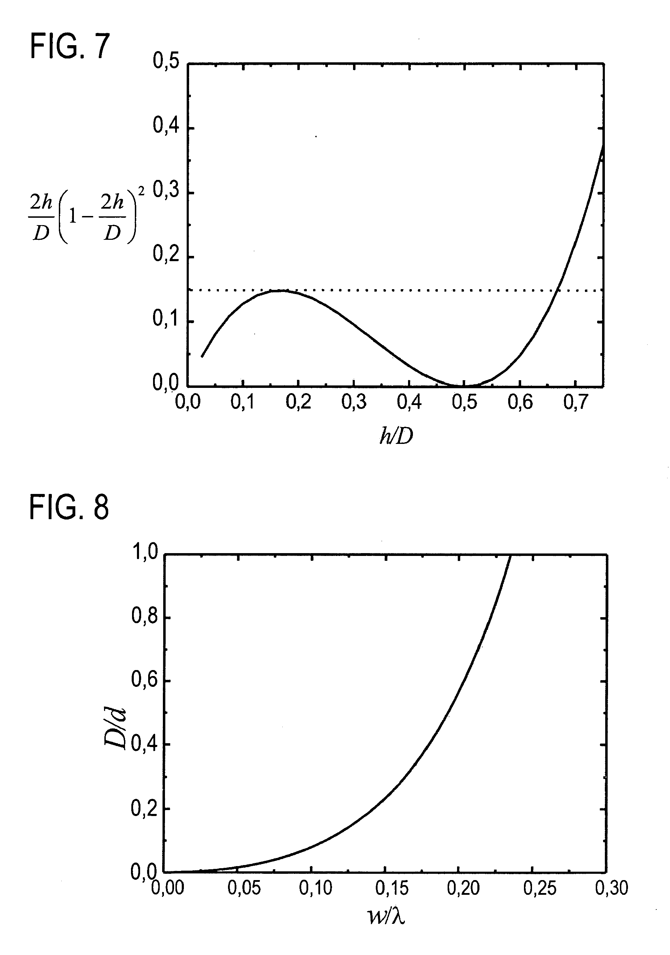

Figure 7 shows the right hand side of equation (3). It is illustrated that the surface becomes unstable when this has reached a value of about 1.48. Accordingly, the voltage which must be applied is

$$U_c < 1.09\frac{D}{w}\sqrt{\frac{\gamma D}{\epsilon_0}} \qquad (4)$$

The inequality is due to the fact that the concentration of electric field lines above the convex deformed liquid surface considerably alleviates the above condition. The constant $\epsilon_0/\gamma$ is about $1.23 \times 10^{-10}$ m/V$^2$ for water. If w = 200 $\mu$m and D = 50 $\mu$m, $U_C \approx 175$ V is obtained. This may be just a very short pulse, with a duration in the millisecond range.

There is a certain constraint upon the distance D which depends on the channel distance $\lambda$. It stems from the requirement that on the one hand, the negative Laplace pressure of the liquid surface in the slit between the carrier substrates 11, 12, which is $p_L = -2\gamma/D$ for complete wetting ($\theta = 0$), must be strong enough to empty the channels. For this it is sufficient to have D < w. On the other hand, the blobs should become sufficiently separated after the liquids have merged. For obtaining a distance of 2w between the edges of adjacent blobs, (as seen e.g. in Figure 5), the condition $\pi D \geq 16\, dW^2/(1-2W)^2$, where W = w/$\lambda$ is to be fulfilled. Hence, the ratio D/d must lie above the solid curve in Figure 8, but below a horizontal line at the inverse aspect ratio of the channel, i.e., D/d $\leq$ w/d = X$^{-1}$. This can easily be fulfilled in practice. The channels can be designed appropriately such that upon formation of connecting points the liquid filaments rupture adjacent to the connecting points and separated liquid blobs are formed.

Above consideration relates only to one embodiment of the invention. It can however be adapted to other embodiments described in this application. The width w, depth d and Distance D should preferably be smaller than the capillary length of the used liquids, (for example 2,7 mm for water). If larger dimensions are chosen, gravitational effects have to be considered in the calculation. Otherwise gravitational effects could be eliminated for example by conducting the inventive method in an oil medium, having the same density as the used liquids.

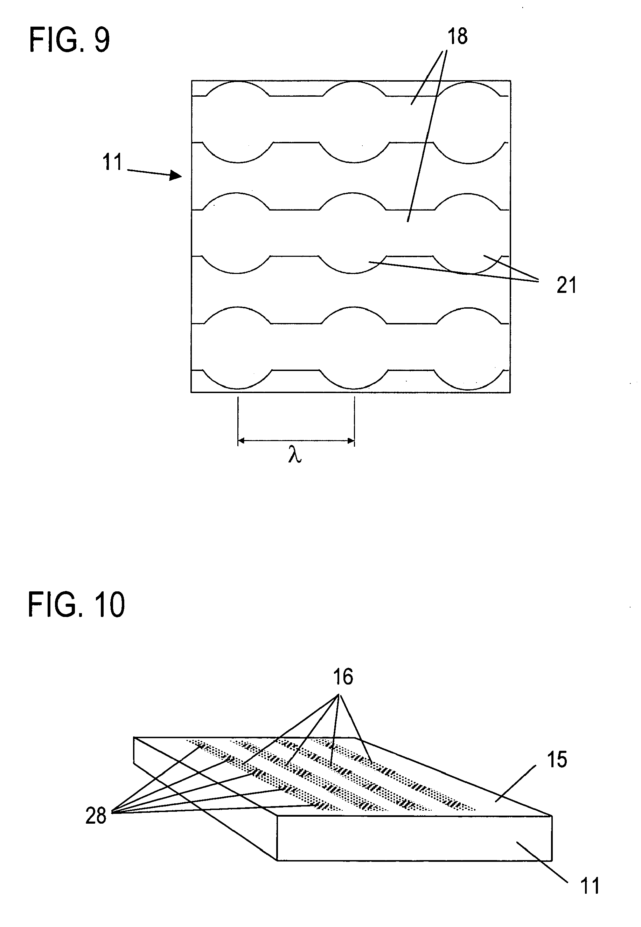

The geometry of the system can be further optimized within the scope of the invention. Figure 9 shows an embodiment of a carrier substrate 11 in which the channels 18 are provided with widened sections formed as cylindrical channels 21. With this embodiment, the voltage to be applied can be scaled down. As an example, if $\lambda$ = 1 mm and the other parameters are the same as in the above example, $U_C$ may be as small as 25 volts.

The carrier substrate 11 of the embodiment shown in Figure 9 is formed of a non-transparent material in which trough-shaped channels 18 are cut. At the positions of the connecting points, circular holes have been drilled in the carrier substrate. These drilled holes are closed by a glass plate onto which the channel structure is being bonded, thereby forming cylindrical channels 21. The glass plate is covered with an electrically conductive ITO layer, thereby forming electrodes 17 for connecting liquid filaments contained in the channels to a voltage supply.

Figure 10 shows a perspective view of a carrier substrate 11 with partially functionalized receiving means. The receiving means 16 are formed as strips of enhanced wettability on a flat surface 15 of the carrier substrate 11. The surface of the receiving means 16 is functionalized at the positions of the designated connecting points. This functionalization 28 is achieved for example by DNA spotting or protein spotting, which means that e.g. proteins or DNA strings are immobilized and fixed to the surface at the location of the designated connecting points. The molecules (e.g. proteins or DNA strings) form a third reaction component which can interact with the first and second reaction components applied as first and second liquid filaments. In this example, the surface functionalization is restricted to the designated connecting points. It can, however, also cover the entire surface of the receiving means 16. Surface functionalization can also be included in the channels 18 of a carrier substrate.

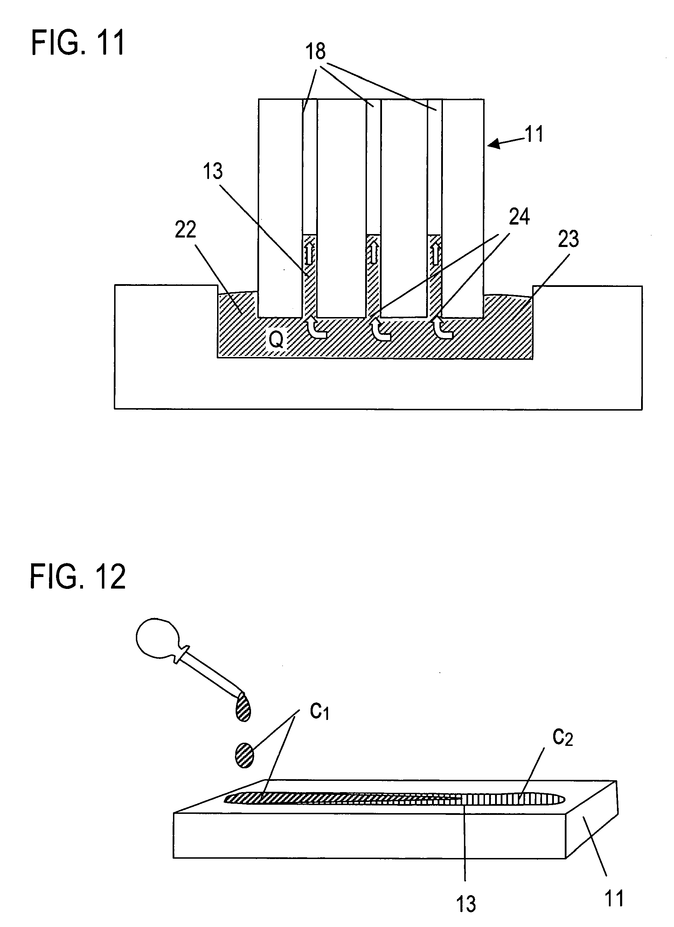

In the following, methods for applying liquid filaments to the carrier substrates will be explained by several examples and with reference to figures 11 and 12.

Figure 11 illustrates a method for applying liquid filaments to a carrier substrate 11 with channels 18 from a liquid bath 22. An open container 23 is filled with a liquid containing a first reaction component. Then, a carrier substrate 11 having vertically arranged channels 18 with open lower ends 24 is dipped into the liquid bath such that the lower ends are immersed in liquid. Due to capillary forces, the liquid starts to rise in the channels 18 of the carrier substrate 11, and liquid filaments 13 are formed in the channels 18. When the channels 18 are completely filled with liquid, the carrier substrate can be drawn out of the liquid bath, while the channels 18 remain filled with liquid filaments 13.

An alternative method for applying a liquid filament 13 onto a carrier substrate 11 is schematically illustrated in figure 12. Here a liquid filament is pipetted onto a flat carrier substrate. The surface 15 of the carrier substrate 11 has strip-shaped regions 16 with an increased wettability, while the contact angle of the liquid on the adjacent surfaces is high. The liquid, which is pipetted onto the surface 15, will thus gather on the strip-shaped regions 16 of increased wettability and thereby form liquid filaments. Pipetting is also possible for applying a liquid filament 13 into a channel 18 if the contact angle and the dimensions of the channel are selected accordingly, as described above.

Now, the formation of a liquid filament with a longitudinal varying concentration profile shall be explained. Such a ramp or gradient in concentration profile naturally forms in a thin tube or channel when it is filled first with a first liquid of concentration $c_2$, and then followed by a liquid of concentration $c_1$. L is the total length of the tube, which is open at both ends and hydrophilic in its interior. Its volume is called V. The liquid $c_2$ is first pipetted next to the opening of the empty tube. Due to capillary forces the liquid is sucked into the tube, which will be completely filled. Assuming that the volume of liquid applied to the tube was equal to V, the space next to the opening will be empty after the filling process. Now, the second liquid ($c_1$) is pipetted to the entrance of the tube. Nothing happens, since the capillary forces remain balanced. However, if liquid is sucked out at the other end of the tube, e.g., by means of a pump, or a napkin paper, the liquid of concentration $c_1$ will be sucked in, and a Poiseuille flow profile will be established within the tube. This is characterized by a parabolic velocity profile, described by $v(r) = v_0 (1-(r/R)^2)$, where R is the radius of the tube (the cross section of which is assumed circular for the moment, but this is of no importance), and r is the radial coordinate. The liquid is sucked until the first traces of liquid $c_1$ reach the rear end of the tube. The parabolic shape of the region filled by liquid $c_1$ within the tube has now the form $r_1 (x) = R (1 - (x/L))^{0,5}$, where x is the coordinate along the tube. The relative concentration of the two liquids at a certain place of the tube is then given by $c = \pi r_1^2/\pi R^2 = 1 - x/L$. Hence, a linear variation of concentration along the tube is obtained. As soon as the diffusion length has reached the radius of the tube, the liquid mixture will be homogeneous laterally, with a constant longitudinal concentration radiant interpolating between the concentrations of the liquids $c_1$ and $c_2$.

This effect, known as Taylor-Aris dispersion, is quite universal and does not depend crucially upon the shape of the cross section of the tube. If the latter is quadratic, the result will not be perfectly linear, but still monotonous, and most importantly, exactly calculable using elementary methods. The same is true for an open channel. An open rectangular channel, having a depth d, which is half its width w, the same concentration profile will result as in a quadratic closed tube.

Thus, a liquid filament 13 with a longitudinal varying concentration profile can be formed by pipetting the liquid onto the surface or into a channel as follows. First, a first liquid filament of a first liquid $c_2$, which may for example be a solvent, is applied by any of the above described methods. Then, a second liquid (solute) $c_1$ is pipetted onto one end of the liquid filament. If, at the same time, the first liquid is sucked from the opposite end of the liquid filament, the second liquid will be sucked into the liquid filament with a Poiseuille flow profile. When suction and pipetting is stopped as soon as a part of the second liquid reaches the suction end of the liquid filament, a concentration profile (ramp) can be achieved in the liquid filament.

Such a concentration profile can also be formed in a liquid bath 23 for filling a plurality of channels 18 in a carrier substrate 11, each with a different concentration. For this application, the cross section of the liquid bath, Q, must be such as to accommodate the liquid needed for the parallel channels in the carrier substrate 11, i.e., λQ must be equal to the volume of a channel 18 on the carrier substrate 11. Thus, when liquid filaments 13 are applied to a carrier substrate 11 comprising a plurality of channels 18 by the above described method of capillary suction from a liquid bath 22, having a spatially varying concentration profile, each liquid filament 13 consists of liquid from a certain region of the liquid bath and thus a certain concentration.

Liquid filaments can also be applied to carrier substrates 11, 12 having receiving means 16, 18 and an additional stripe of enhanced wettability (e.g. a hydrophilic stripe). The additional stripe of enhanced wettability may preferably be arranged perpendicular to a plurality of parallel arranged receiving means in the vicinity to one end of the receiving means 16, 18. The method shall be described by way of example for carrier substrates having channel-formed receiving means 18 and an additional hydrophilic stripe while an aqueous liquid is used. Two carrier substrates, each with at least one hydrophilic stripe on its surface 15, are arranged at a small distance D, such that the hydrophilic stripes are parallel and oppose each other. A liquid can then be sucked from a reservoir into the gap between the hydrophilic stripes due to capillarity. After the liquid has been consecutively sucked into the stripe region, contact can be achieved with the channels 18, present in the surfaces of (at least one of) the carrier substrates, if the ends of the channels 18 are located in some proximity of the hydrophilic stripes, by just reducing the distance D of the carrier substrates. This causes the liquid to exceed the area defined by the hydrophilic stripes, and to reach the ends of the channels, into which it is rapidly sucked due to capillarity.

By applying this method to carrier substrates in which the channels have already been filled with a first liquid component, and thereby applying a second liquid component, a concentration gradient within the channels can be achieved similarly to above described method.

The features of the invention disclosed in the above description, the drawings and the claims can be of significance both individually as well as in combination for the realization of the invention in its various embodiments.

**Claims**

1.  Method for combining reaction components contained in liquids
    comprising the steps:

    - application of at least one first liquid filament (13) containing a first reaction component on a first carrier substrate (11);
    - application of at least one second liquid filament (14) containing a second reaction component on a second carrier substrate (12);
    - positioning of the two carrier substrates (11, 12) relative to each other at a predetermined distance such that the liquid filaments (13, 14) face each other;
    - bringing at least one of the at least one first liquid filament (13) into contact with at least one of the at least one second liquid filament (14) by creating at least one connecting point of the respective first (13) and second liquid filaments (14).

2.  Method according to claim 1,
    **characterized in that**
    the at least one first liquid filament (13) and/or the at least one second liquid filament (14) is accommodated in/on a receiving means (16, 18) comprised in the first and/or second carrier substrate (11, 12), respectively.

3.  Method according to claim 2,
    **characterized in that**
    the receiving means is a channel (18) in which the liquid filament (13, 14) is formed and which is recessed from a surface (15) of the carrier substrate or the receiving means is a modified section (16) of the surface (15) having enhanced wetting properties.

4.  Method according to one of the preceding claims,
    **characterized in that**
    a plurality of the first (13) and/or second (14) liquid filaments is applied on the first (11) and/or second (12) carrier substrates, wherein the first and/or second liquid filaments (13, 14) on at least one of the carrier substrates (11, 12) include varying reaction components, varying compositions of reaction components and/or varying concentrations of reaction components.

5.  Method according to one of the preceding claims,
    **characterized in that**
    at least one of the first and/or at least one of the second liquid filaments (13, 14) is applied on the first and/or second carrier substrate (11, 12) such that the composition or concentration of the reaction component contained in the liquid filament (13, 14) varies along the liquid filament (13, 14).

6.  Method according to one of the preceding claims,
    **characterized in that**
    a plurality of the first and/or second liquid filaments (13, 14) are arranged in parallel lines on the first and/or second carrier substrate (11, 12), respectively and/or
    the first and second carrier substrates (11, 12) are positioned relative to each other such that the first liquid filaments (13) and second liquid filaments (14) are perpendicular to each other.

7.  Method according to one of the preceding claims,
    **characterized in that**
    the at least one first (13) and the at least one second (14) liquid filament are brought into contact by reducing the distance between the first and second carrier substrate (11, 12) and/or by application of an electric field between the at least one first and the at least one second liquid filament (13, 14).

8.  Method according to one of the claims 3 to 7,
    **characterized in that**

the at least one first (13) and/or the at least one second (14) liquid filament is applied to the recessed channel (18) by capillary suction from a liquid bath (23).

9. Method according to one of the claims 1 to 7,
   **characterized in that**
   the at least one first (13) and/or the at least one second (14) liquid filament is applied to the first (11) and/or second (12) carrier substrate by pipetting the liquid onto the carrier substrate (11, 12).

10. Method according to one of claims 1 to 7,
    **characterized in that**
    the at least one first and/or the at least one second liquid filament (13, 14) is applied to the first and/or second carrier substrate (11, 12) by an electric field created by at least one electrode (17) comprised in the first and/or the second carrier substrate, respectively.

11. Method according to one of the preceding claims,
    **characterized in that**
    the at least one first (13) and/or the at least one second (14) liquid filament is applied to the first and/or second carrier substrate (11, 12) by first applying a first liquid onto the carrier substrate (11, 12) and subsequent applying a second liquid onto the carrier substrate (11, 12), thereby producing a liquid filament (13, 14) with varying composition or concentration of a reaction component along the liquid filament (13, 14).

12. Method according to one of the preceding claims,
    **characterized by** the additional steps of

    - separating the first and second carrier substrates (11, 12) after the at least one first and second liquid filaments (13, 14) have been brought into contact with each other and after separated liquid blobs have formed in the connecting points; and
    - combining the liquid blobs with at least one third reaction component.

13. Method according to one of the preceding claims,
    **characterized by**
    combining the first and second liquid filaments (13, 14) with at least one third reaction component which is fixed to the first and/or the second carrier substrate prior to application of the first and second liquid filaments (13, 14).

14. Microfluidic device for combining reaction components contained in liquids, comprising:

    - an application device being adapted for providing at least one first reaction component and at least one second reaction component, and
    - an actuating device being adapted for bringing the at least one first and second reaction components into contact with each other,

    **characterized in that**

    - the application device comprises two carrier substrates (11, 12) each being adapted for accommodating at least one first (13) and at least one second (14) liquid filament, respectively, and the application device is adapted for positioning the carrier substrates (11, 12) relative to each other at a predetermined distance such that the liquid filaments (13, 14) face each other, and
    - the actuating device being adapted for bringing the at least one first liquid filament (13) into contact with the at least one second liquid filament (14) by creating at least one connecting point of the respective first and second liquid filaments (13, 14).

15. Microfluidic device according to claim 14,
    **characterized in that**
    at least one of the carrier substrates (11, 12) comprises at least one receiving means (16, 18) for accommodating the at least one first (13) or second liquid filament (14).

16. Microfluidic device according to claim 15,
    **characterized in that**

the at least one receiving means is an elongated channel (18) which is recessed from a flat surface (15) of the carrier substrate (11, 12) or a modified section (16) of the surface (15) having increased wetting properties for accommodating a first or a second liquid filament (13, 14), respectively.

17. Microfluidic device according to claim 16,
**characterized in that**
the elongated channel (18) has dimensions selected in dependence on wetting properties of the liquid to be applied on the carrier substrate (11, 12) such that the liquid is capable of filling the channel (18) while wetting a surface (15) of the carrier substrate (11, 12) next to the channel (18) is suppressed.

18. Microfluidic device according to claim 17,
**characterized in that**
the elongated channel (18) has a rectangular cross section with a width w and a depth d having an aspect ratio X=d/w selected in dependence on the contact angle of the liquid to be used on the carrier substrate (11, 12) such that the liquid to be used is capable of filling the channel (18) while wetting a surface (15) of the carrier substrate (11, 12) next to the channel (18) is suppressed.

19. Microfluidic device according to one of claims 15 to 18, **characterized in that**
a plurality of receiving means (16, 18), each for accommodating one liquid filament (13, 14), is arranged in parallel on at least one of the carrier substrates (11, 12), and/or the application device (10) is adapted for positioning the carrier substrates (11, 12) relative to each other such that the receiving means (16, 18) on the first carrier substrate (11) are perpendicular to the receiving means (16, 18) on the second carrier substrate (12).

20. Microfluidic device according to one of claims 14 to 19, **characterized in that**
at least one of the first and the second carrier substrates (11, 12) comprises at least one electrode (17) which can be connected to a voltage supply.

21. Microfluidic device according to one of claims 15 to 20, **characterized in that**
at least one of the at least one receiving means (16, 18) comprises an at least partially functionalized surface (28).

22. Microfluidic device according to one of claims 16 to 21, **characterized in that**
the at least one channel (18) comprises widened sections (21).

23. Microfluidic device according to one of claims 16 to 22, **characterized in that**
the bottom of the at least one channel (18) in at least one carrier substrate (11, 12) is at least partially transparent.

24. Microfluidic device according to one of claims 14 to 23, **characterized in that**
it further comprises a spacer device (20) for keeping the predetermined minimum distance between both carrier substrates (11, 12).

25. Carrier substrate (11), in particular being adapted to be used with a microfluidic device according to one of claims 14 to 24,
having a flat surface (15), and a plurality of elongated receiving means (16, 18) arranged on the flat surface (15), wherein
each of the receiving means (16, 18) is adapted for accommodating a liquid filament (13, 14) while being adapted to wetting properties of the liquid forming the liquid filament, such that the liquid is capable of being accommodated in the receiving means (16, 18) while wetting of the flat surface (15) next to the receiving means (16, 18) is suppressed;
the carrier substrate (11) further being adapted to be positioned relative to a second carrier substrate having a flat surface with the flat surfaces (15) facing each other; and
the carrier substrate (11) comprising a spacer device (20) for keeping a predetermined minimum distance between its flat surface (15) and the second carrier substrate (12).

26. Carrier substrate according to claim 25,
**characterized in that** the receiving means (16, 18) comprise an at least partially functionalized surface (28).

# FIG. 1

# FIG. 2

## (a)

## (b)

FIG. 3

FIG. 4

## FIG. 5

11 / 12

19

18

## FIG. 6

15

11

17

20

18

FIG. 7

$$\frac{2h}{D}\left(1-\frac{2h}{D}\right)^2$$

$h/D$

FIG. 8

$D/d$

$w/\lambda$

## FIG. 9

## FIG. 10

## FIG. 11

## FIG. 12

Europäisches
Patentamt

European
Patent Office

Office européen
des brevets

# EUROPEAN SEARCH REPORT

Application Number

EP 08 01 2597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 197 48 295 A1 (MAX PLANCK GESELLSCHAFT [DE]) 6 May 1999 (1999-05-06) * column 1, lines 3-11 * * column 2, lines 35-45 * * figures 1-4 * | 1-3,14, 15,25 | INV. B01L3/00 |
| A | * column 2, lines 35-45 * * paragraph [0057] * ----- | 7,19 | |
| A | US 2003/180711 A1 (TURNER STEPHEN W [US] ET AL) 25 September 2003 (2003-09-25) * paragraph [0005]; figure 1 * ----- | 3,8, 16-18 | |
| A | WO 02/089982 A (MASSACHUSETTS INST TECHNOLOGY [US]) 14 November 2002 (2002-11-14) * page 1, line 28 - page 2, line 3 * ----- | 4,5,11 | |
| A | US 6 517 736 B1 (FLANNERY ANTHONY [US] ET AL) 11 February 2003 (2003-02-11) * column 2, lines 29-41 * ----- | 3,16-18 | |
| A | WO 98/58247 A (SOANE BIOSCIENCES INC [US]) 23 December 1998 (1998-12-23) * page 4, lines 19-30 * ----- | 7,10 | TECHNICAL FIELDS SEARCHED (IPC) B01L |
| A | EP 1 777 002 A (SAMSUNG ELECTRONICS CO LTD [KR]) 25 April 2007 (2007-04-25) * paragraphs [0002], [0022]; figure 1 * ----- | 7,10,20 | |
| A | WO 2006/085905 A (UNIV TEXAS [US]; GASCOYNE PETER R C [US]; VYKOUKAL JODY V [US]; SCHWAR) 17 August 2006 (2006-08-17) * page 22, lines 5-11 * ----- | 7 | |

The present search report has been drawn up for all claims

| Place of search | Date of completion of the search | Examiner |
|---|---|---|
| Munich | 27 October 2008 | Viskanic, Martino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 143 492 A1

**ANNEX TO THE EUROPEAN SEARCH REPORT
ON EUROPEAN PATENT APPLICATION NO.**                    EP 08 01 2597

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2008

| Patent document cited in search report | | | Publication date | Patent family member(s) | | | Publication date |
|---|---|---|---|---|---|---|---|
| DE | 19748295 | A1 | 06-05-1999 | WO | 9923437 | A1 | 14-05-1999 |
| US | 2003180711 | A1 | 25-09-2003 | US | 2006185981 | A1 | 24-08-2006 |
| WO | 02089982 | A | 14-11-2002 | CA | 2446157 | A1 | 14-11-2002 |
| | | | | EP | 1385628 | A2 | 04-02-2004 |
| | | | | JP | 2005507492 | T | 17-03-2005 |
| US | 6517736 | B1 | 11-02-2003 | NONE | | | |
| WO | 9858247 | A | 23-12-1998 | AU | 8149398 | A | 04-01-1999 |
| | | | | CA | 2294220 | A1 | 23-12-1998 |
| | | | | EP | 1021707 | A1 | 26-07-2000 |
| | | | | JP | 2002505009 | T | 12-02-2002 |
| | | | | US | 5900130 | A | 04-05-1999 |
| EP | 1777002 | A | 25-04-2007 | JP | 2007093605 | A | 12-04-2007 |
| | | | | KR | 20070035737 | A | 02-04-2007 |
| | | | | US | 2007170059 | A1 | 26-07-2007 |
| WO | 2006085905 | A | 17-08-2006 | EP | 1765501 | A1 | 28-03-2007 |

EPO FORM P0459

For more details about this annex : see Official Journal of the European Patent Office, No. 12/82

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. Seemann et al.** *P.N.A.S.,* 2005, vol. 102 (6), 1848-1852
- **J.-C. Baret ; M. Decre ; S. Herminghaus ; R. Seemann.** *Langmuir,* 2007, vol. 23, 5200
- **H. Gau ; S. Herminghaus ; P. Lenz ; R. Lipowsky.** *Science,* 1999, vol. 283, 46

- **G. Taylor.** *Proc. Roy. Soc. London Ser. A,* 1953, vol. 219, 186
- **M. S. Bello ; R. Rezzonico ; P. G. Righetti.** *Science,* 1994, vol. 266, 773